# EUROPEAN PATENT SPECIFICATION

(11) **EP 2 648 433 B1**
(45) Date of publication and mention of the grant of the patent: **11.10.2017**
(21) Application number: 11853016.1
(22) Date of filing: 30.12.2011
(51) Int. Cl.: H04W 4/22

(54) **ACCESS METHOD AND DEVICE FOR USER IN EXCEPTION, AND COMMUNICATION SYSTEM**
ZUGRIFFSVERFAHREN UND -VORRICHTUNG FÜR EINEN AUSNAHMEBENUTZER UND KOMMUNIKATIONSSYSTEM
PROCÉDÉ ET DISPOSITIF D'ACCÈS POUR UTILISATEUR À TITRE EXCEPTIONNEL

(30) Priority: 30.12.2010 CN 201010616152
(43) Date of publication of application: 09.10.2013
(73) Proprietor: Huawei Technologies Co., Ltd., Longgang District Shenzhen, Guangdong 518129 (CN)
(72) Inventor: LU, Wenzhuo, Shenzhen Guangdong 518129 (CN); MEI, Jingjin, Shenzhen Guangdong 518129 (CN); FU, Shaofeng, Shenzhen Guangdong 518129 (CN)
(74) Representative: Goddar, Heinz J.
(86) International application number: PCT/CN2011/085064
(87) International publication number: WO 2012/089161

(56) References cited:
- EP-A1- 2 244 512
- WO-A1-02/089515
- WO-A1-02/089515
- WO-A1-2010/105462
- WO-A2-2010/120689
- CN-A- 101 360 323
- CN-A- 101 730 035
- CN-A- 102 065 400
- GB-A- 2 440 576
- GB-A- 2 440 576
- US-A1- 2004 190 522

## Description

### FIELD OF THE INVENTION

The present invention relates to the field of mobile communications, and in particular, to an access method and device for a user equipment in an abnormal state, and a communication system.

### BACKGROUND OF THE INVENTION

A conventional global system for mobile communications (GSM, Global System for Mobile Communications) network architecture is formed by network elements such as a base transceiver station (BTS, Base Transceiver Station), a base station controller (BSC, Base Station Controller), a mobile switching center (MSC, Mobile Switching Center), and a home location register (HLR, Home Location Register). It is seen from geographic distribution of the network elements that, the BTS is disposed at a coverage place, the BSC, MSC, and HLR are generally disposed at the center of a city, and the BTS is connected to the BSC through a transmission link. Only if the network elements collaborate with each other can communication be implemented between user equipments. One of functions of the HLR is responsible for storing user information such as an international mobile subscriber identity (IMSI, International Mobile Subscriber Identity) and a mobile subscriber ISDN number (MSISDN, Mobile Subscriber ISDN Number). When a user equipment attempts to be attached to a GSM network, the user equipment reports an IMSI, and the GSM network searches for a corresponding user equipment record in the HLR according to the IMSI. If the HLR has no such user equipment record, the user equipment cannot be attached to the network.

In a conventional GSM network, information is mostly transmitted between network elements by using a terrestrial link. Therefore, in an abnormal state, for example, when a disaster occurs, transmission is vulnerable to interruption and is hardly recoverable in a short time. Even if a mobile communication vehicle enters a disaster place to recover communication, a problem that external transmission is still hardly obtained also occurs. That is because, even if wireless communication can be implemented between a terminal and the BTS or mobile communication vehicle, the user information cannot be verified by the HLR, and the network still regards the user equipment as an abnormal user equipment and does not allow the user equipment to be attached to the network.

When the transmission recovers, for certain non-local user equipments, for example, for a user equipment that rushes to the disaster area to implement emergency rescue, the user equipment is also rejected by the HLR and cannot be attached to the network if a roaming service of the user equipment is not activated or no record of the user equipment is found in the HLR. However, in a disaster scenario, it is obviously necessary to provide a communication service for these non-local user equipments.

Similarly, in networks of other standards such as a wideband code division multiple access (WCDMA, Wideband Code Division Multiple Access) system, a code division multiple access (CDMA, Code Division Multiple Access) system, and a long term evolution (LTE, Long Term Evolution) system, the same problem also occurs.

In other words, a conventional communication network architecture can still not provide a function of retrieving or verifying user information of an abnormal user equipment locally, and therefore, these user equipments cannot be attached to a network.

Prior art on enabling network attachment of a user equipment in an emergency situation can be found in WO 2010/105462 A1, GB 2 440 576 A, US 2004/190522 A1, EP 2 244 512 A1, WO 2010/120689 A2, WO 02/089515 A1, and GB 2 440 576 A.

### SUMMARY OF THE INVENTION

The present invention provides an access method and device for a user equipment in an abnormal state, and a communication system, so as to allow the user equipment in the abnormal state to be attached to a network and provide a communication service for the user equipment.

The access method for a user equipment in an abnormal state includes: determining, by a local emergency center, whether a user equipment that initiates an attach procedure can continue the attach procedure; and if the attach procedure cannot be continued, allocating, by the local emergency center, a temporary communication identity for the user equipment and allowing the user equipment to be attached to a network.

The access device for a user equipment in an abnormal state is a local emergency center, and the local emergency center includes: a determining module, configured to determine whether a user equipment that initiates an attach procedure can continue the attach procedure; and a temporary identity allocating module, configured to, if a determination result of the determining module is that the attach procedure cannot be continued, allocate a temporary communication identity for the user equipment and allow the user equipment to be attached to a network.

The communication system includes a base station and a local emergency center that is connected to the base station. The base station is configured to interact with a user equipment that initiates an attach procedure and transmit user information of the user equipment to the local emergency center; and the local emergency center includes a determining module and a temporary identity allocating module, where the determining module is configured to determine, according to the user information transmitted by the base station, whether the user equipment that initiates the attach procedure can continue the attach procedure; and the temporary identity allocating module is configured to, if a determination result of the determining module is that the attach procedure cannot be continued, allocate a temporary communication identity for the user equipment and allow the user equipment to be attached to a network.

It can be known from the foregoing that, in an abnormal state, with the technical solutions provided in the present invention, the user equipment may communicate with another user equipment, and an emergency communication service is provided for the user equipment.

### BRIEF DESCRIPTION OF THE DRAWINGS

To describe the technical solutions in the embodiments of the present invention more clearly, the accompanying drawings used in the description of the embodiments or the prior art are briefly introduced in the following. Apparently, the accompanying drawings in the following description are only some embodiments of the present invention, and persons of ordinary skill in the art may still derive other drawings from these accompanying drawings without creative efforts.
FIG. 1 is a schematic flowchart of an access method for a user equipment in an abnormal state according to an embodiment of the present invention;
FIG. 2 is a schematic diagram of a signaling procedure that a local emergency center allocates a temporary communication identity for a user equipment according to an embodiment of the present invention;
FIG. 3 is a schematic diagram of a signaling procedure of modifying a temporary communication identity allocated for a user equipment according to an embodiment of the present invention;
FIG. 4 is a schematic logical structural diagram of an access device for a user equipment in an abnormal state according to an embodiment of the present invention;
FIG. 5 is a schematic logical structural diagram of an access device for a user equipment in an abnormal state according to another embodiment of the present invention;
FIG. 6 is a schematic logical structural diagram of an access device for a user equipment in an abnormal state according to another embodiment of the present invention;
FIG. 7 is a schematic logical structural diagram of an access device for a user equipment in an abnormal state according to another embodiment of the present invention;
FIG. 8 is a schematic logical structural diagram of an access device for a user equipment in an abnormal state according to another embodiment of the present invention;
FIG. 9 is a schematic logical structural diagram of a communication system according to an embodiment of the present invention;
FIG. 10 is a schematic logical structural diagram of a communication system according to another embodiment of the present invention;
FIG. 11 is a schematic logical structural diagram of a communication system according to another embodiment of the present invention;
FIG. 12 is a schematic logical structural diagram of a communication system according to another embodiment of the present invention; and
FIG. 13 is a schematic logical structural diagram of a communication system according to another embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments to be described are only a part rather than all of the embodiments of the present invention. Base on the embodiments of the present invention, all other embodiments obtained by persons of ordinary kill in the art without making creative efforts shall fall within the protection scope of the present invention.

The technical solutions of the present invention are applicable to various communication systems such as a global system for mobile communications (GSM, Global System for Mobile communications), a code division multiple access (CDMA, Code Division Multiple Access) system, a wideband code division multiple access wireless (WCDMA, Wideband Code Division Multiple Access Wireless) system, a general packet radio service (GPRS, General Packet Radio Service), and a long term evolution (LTE, Long Term Evolution) system.

Embodiments not covered by the claims are to be regarded as examples. A mobile terminal (Mobile Terminal), also known as a mobile user equipment (UE, User Equipment), may communicate with one or more core networks through a radio access network (RAN, Radio Access Network). The mobile terminal may be a mobile phone (or known as a "cell" phone) or a computer with a mobile capability, for example, may be a portable mobile device, a pocket mobile device, a handheld mobile device, or a mobile device built in a computer or vehicle. The mobile devices exchange languages and/or data with the radio access network.

A base station may be a base transceiver station (BTS, Base Transceiver Station) in a GSM or CDMA system, may also be a NodeB (NodeB) in a WCDMA system, and may also be an evolved NodeB (eNB or eNodeB, evolved NodeB) in an LTE system, which is not limited in the present invention. To facilitate description, the GSM system is taken as an example in the following embodiments.

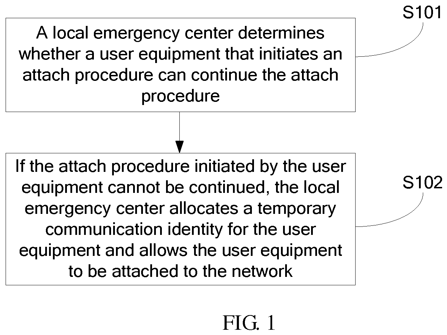

FIG. 1 is a schematic flowchart of an access method for a user equipment in an abnormal state according to an embodiment of the present invention, where the method may be described as follows.

S101: A local emergency center determines whether a user equipment that initiates an attach procedure can continue the attach procedure.

In this embodiment of the present invention, the local emergency center is a device that may be connected to a base transceiver station (BTS, Base Transceiver Station) directly or indirectly, through a radio interface or through a cable such as a fiber or a coaxial cable. The local emergency center may obtain user information and store the user information locally. For example, one manner that the local emergency center obtains the user information is: When the local emergency center cannot access an HLR through a network, the local emergency center may obtain the user information through a local file, for example, obtain a record file about the user information from a USB flash disk through a USB interface, and a software system of the local emergency center imports the file to obtain the user information. Another manner is: When the local emergency center can access the HLR through the network, the local emergency center accesses the HLR remotely to obtain a user information record. For example, the HLR starts a file transfer protocol (FTP, File Transfer Protocol) server, and, as an FTP client, the local emergency center accesses the FTP server to obtain the user information.

When a connection between a BTS and a BSC is normal, an embodiment of the present invention further provides a manner for obtaining user information, namely, in an uplink transmission direction, the BTS forwards a message to the local emergency center, the local emergency center analyzes the message to obtain the user information and then returns the message to the BTS, and the BTS sends the message to the BSC; or, in a downlink transmission direction, the BSC sends a message to the BTS, the BTS forwards the message to the local emergency center, and the local emergency center analyzes the message to obtain the user information and then returns the message to the BTS, and the BTS continues to process the message.

In this embodiment of the present invention, the user information may include an international mobile subscriber identity (IMSI, International Mobile Subscriber Identity) and/or a mobile subscriber ISDN number (MSISDN, Mobile Subscriber ISDN Number).

S102: If the attach procedure initiated by the user equipment cannot be continued, the local emergency center allocates a temporary communication identity for the user equipment and allows the user equipment to be attached to the network.

Being different from a conventional GSM network, in this embodiment of the present invention, if the local emergency center determines that the attach procedure initiated by the user equipment cannot be continued, for example, no user information of the user equipment is found locally, user information of the user equipment cannot be found through the HLR, or user information of the user equipment is also not found in the HLR, the local emergency center does not reject the user equipment directly, but creates a user equipment record for the user equipment, and at the same time, allocates a temporary communication identity such as a temporary MSISDN for the user equipment, and allows the user equipment to be attached to the network. In this way, under control of the local emergency center, this user equipment may communicate with a user equipment that has a user information record in the local emergency center.

It can be known from the foregoing embodiment of the present invention that, because the local emergency center is connected to a base station, when it is determined that the user equipment that initiates the attach procedure cannot continue the attach procedure, the local emergency center may allocate a temporary communication identity for the user equipment and allow the user equipment to be attached to the network. Therefore, in an abnormal state, the local emergency center provided in this embodiment of the present invention and the base station actually form a mini GSM network that is similar to an ordinary GSM network. The local emergency center has a similar function of an MSC or HLR, and may manage the user equipment locally, allows the user equipment to communicate with another user equipment, and then provides an emergency communication service for the user equipment.

The abnormal state described in this specification may refer to a state that communication cannot be performed normally. For example, a most common case is that a connection between the BTS and the BSC is interrupted, and at this time, the BTS cannot transmit the user information to the MSC or HLR through the BSC for verification. In this state, according to an embodiment of the present invention, because the BTS is still connected to the local emergency center, the BTS may still forward the user information of the user equipment that initiates the attach procedure to the local emergency center. Accordingly, the local emergency center searches for user information stored locally. If the user information of the user equipment is stored locally, the local emergency center may determine that the user equipment that initiates the attach procedure can continue the attach procedure, and allow the user equipment to be attached to the network.

In an abnormal state, another common case is: A connection between the BTS and the BSC is normal, and the BTS may transmit user information of a local user equipment to the MSC or HLR through the BSC for verification, but the MSC or HLR cannot verify user information of a user equipment that has not activated a roaming service. In this state, according to another embodiment of the present invention, when a user equipment that has not activated a roaming service initiates an attach procedure, and an MSC or HLR of a core network responds to the user equipment and feeds back a message to the user equipment, the local emergency center intercepts the message that is fed back by the core network to the user equipment. If the message is a rejection message that attachment of the user equipment to the network is rejected, the local emergency center determines that the user equipment that initiates the attach procedure cannot continue the attach procedure.

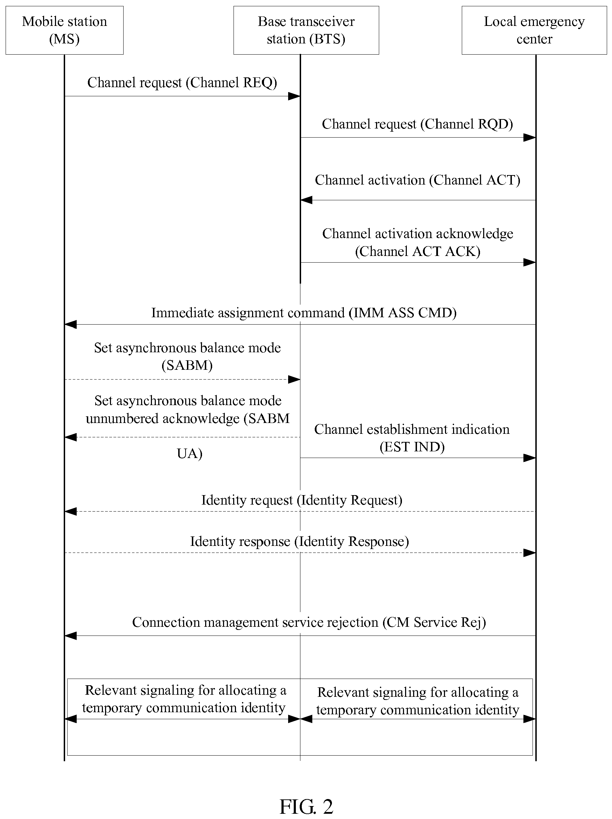

The local emergency center determines whether the user equipment that initiates the attach procedure can continue the attach procedure, and when the attach procedure cannot be continued, allocates a temporary communication identity for the user equipment and allows the user equipment to be attached to the network. A signaling procedure is shown in FIG. 2.

S201: A BTS interacts with a user equipment that initiates an attach procedure, and forwards "establishment indication (EST IND, Establishment Indication)" signaling to a local emergency center.

If the EST IND includes user information such as an IMSI, the local emergency center queries a formal user equipment database and a temporary user equipment database for the IMSI. If the IMSI cannot be queried and found in the formal user equipment database and the temporary user equipment database, the local emergency center returns "connection management service rejection (CM Service Rej, Connection Management Service Rejection) signaling" to a mobile station (MS, mobile station) through the BTS, releases a solely dedicated channel (SDCH, Solely Dedicated CHannel) to terminate this call, and starts a procedure for allocating a temporary communication identity.

S202: If the EST IND includes no user information such as an IMSI, the local emergency center delivers "identity request (Identity Request)" signaling to the MS through the BTS, to request the MS to report user information such as an IMSI.

S203: After the MS reports "identity response (Identity Response)" signaling, the local emergency center checks whether an IMSI in the signaling is a formal user equipment or a temporary user equipment. A processing procedure is as step S201.

S204: After the foregoing service procedure is terminated, the local emergency center allocates a temporary communication identity for the user equipment.

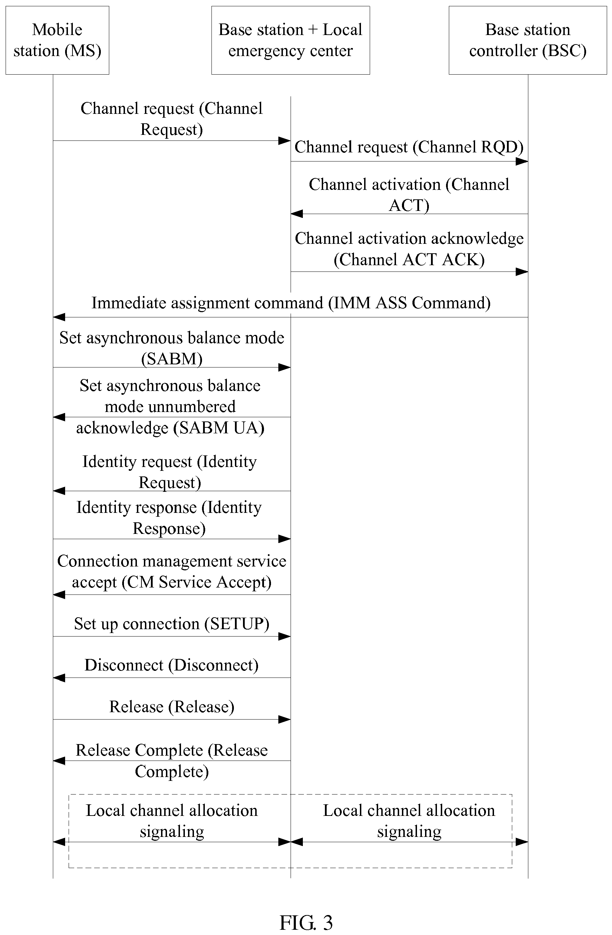

After the local emergency center allocates the temporary communication identity for the user equipment, because the temporary communication identity is temporarily allocated, the user equipment may not be accustomed to using the temporary communication identity. In this embodiment of the present invention, the local emergency center provides a mechanism of modifying a temporary communication identity for a user equipment. That is, the local emergency center receives a request for modifying a temporary communication identity from a user equipment, the local emergency center notifies the user equipment of a modified temporary communication identity according to the request, and the user equipment may use the modified temporary communication identity. Specifically, the user equipment dials a number formed by "a special prefix plus an expected temporary communication identity", and reports the expected temporary communication identity to the local emergency center. For example, the user equipment dials "*#00#" + an expected temporary communication identity, and the local emergency center parses the special prefix out, and terminates a call request without setting up a speech channel, and then updates the temporary communication identity that is previously allocated for the user equipment to a temporary communication identity expected by the user equipment, and notifies the user equipment, for example, by sending a short message "Your telephone number has been updated, and your new number is... (namely, the temporary communication identity expected by the user equipment)" to the user equipment. A detailed procedure is shown in FIG. 3.

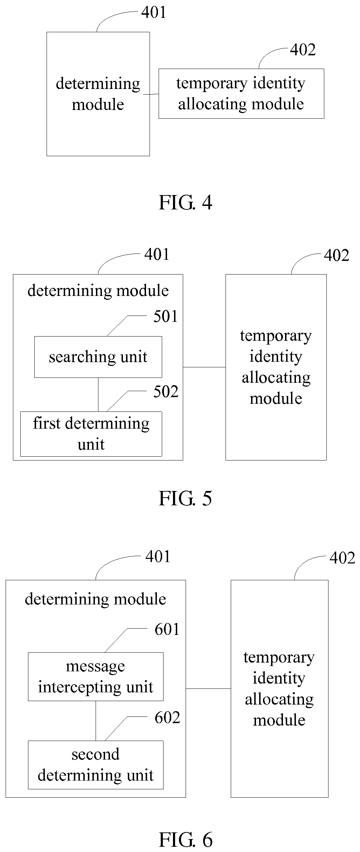

FIG. 4 is a schematic logical structural diagram of an access device for a user equipment in an abnormal state according to an embodiment of the present invention. To facilitate the description, only a part related to this embodiment of the present invention is described. The access device shown in FIG. 4 may be a local emergency center. The local emergency center is connected to a BTS in a GSM network, and a function module/unit included in the local emergency center may be a software module/unit, a hardware module/unit, or a software and hardware module/unit. A determining module 401 and a temporary identity allocating module 402 are included.

The determining module 401 is configured to determine whether a user equipment that initiates an attach procedure can continue the attach procedure.

The temporary identity allocating module 402 is configured to, if a determination result of the determining module 401 is that the attach procedure cannot be continued, allocate a temporary communication identity for the user equipment and allow the user equipment to be attached to a network.

The determining module 401 shown in FIG. 4 may further include a searching unit 501 and a first determining unit 502. FIG. 5 shows an access device for a user equipment in an abnormal state according to another embodiment of the present invention.

The searching unit 501 is configured to search for user information stored in the local emergency center.

The first determining unit 502 is configured to, if user information of the user equipment is stored in the local emergency center, determine that the user equipment that initiates the attach procedure can continue the attach procedure.

The determining module 401 shown in FIG. 4 may further include a message intercepting unit 601 and a second determining unit 602. FIG. 6 shows an access device for a user equipment in an abnormal state according to another embodiment of the present invention.

The message intercepting unit 601 is configured to intercept a message that is fed back by a core network to the user equipment.

The second determining unit 602 is configured to, if the message intercepted by the message intercepting unit 601 is a rejection message that attachment of the user equipment to the network is rejected, determine that the user equipment that initiates the attach procedure cannot continue the attach procedure.

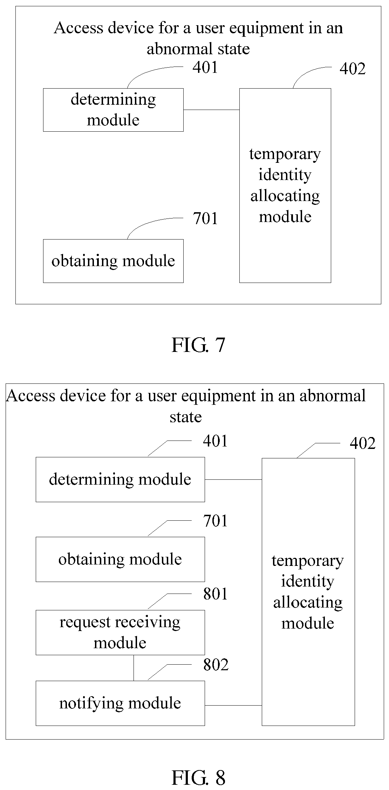

Any one access device shown in FIG. 4 to FIG. 6 may further include an obtaining module 701. FIG. 7 shows an access device for a user equipment in an abnormal state according to another embodiment of the present invention. The obtaining module 701 is configured to obtain user information and store the user information in the local emergency center.

Any one access device shown in FIG. 4 to FIG. 7 may further include a request receiving module 801 and a notifying module 802. FIG. 8 shows an access device for a user equipment in an abnormal state according to another embodiment of the present invention.

The request receiving module 801 is configured to receive a request for modifying the temporary communication identity from the user equipment.

The notifying module is configured to notify the user equipment of a modified temporary communication identity according to the request received by the request receiving module 801.

It should be noted that, in the access device for a user equipment in an abnormal state in the foregoing implementation manners, division of function modules is only exemplary. In practical applications, according to a requirement such as a hardware configuration requirement or software implementation convenience, the foregoing functions may be implemented by different function modules, namely, an internal structure of the access device for a user equipment in an abnormal state is divided into different function modules to implement all or part of the functions described in the foregoing. Moreover, in practical applications, corresponding function modules in this embodiment may be implemented by corresponding hardware, and may also be implemented by corresponding software executed by corresponding hardware. For example, the determining module may be hardware such as a determining device that executes a function of determining whether the user equipment that initiates the attach procedure can continue the attach procedure, and may also be a general processor or another hardware device capable of executing a corresponding computer program to implement the foregoing function. For example, the temporary identity allocating module may be hardware such as a temporary identity allocating device that executes a function of allocating a temporary communication identity for the user equipment and allowing the user equipment to be attached to the network, and may also be a general processor or another hardware device capable of executing a corresponding computer program to implement the foregoing function.

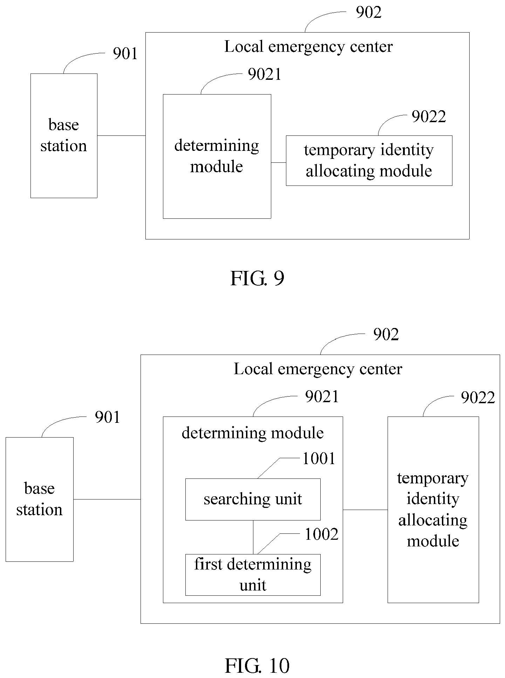

FIG. 9 is a schematic logical structural diagram of a communication system according to an embodiment of the present invention. To facilitate the description, only a part related to this embodiment of the present invention is described. The communication system shown in FIG. 9 includes a base station 901 and a local emergency center 902 that is shown in FIG. 4 to FIG. 8.

The base station 901 is configured to interact with a user equipment that initiates an attach procedure and transmit user information of the user equipment to the local emergency center 902.

The local emergency center 902 is configured to determine, according to the user information transmitted by the base station, whether the user equipment that initiates the attach procedure can continue the attach procedure, and if a determination result is that the attach procedure cannot be continued, allocate a temporary communication identity for the user equipment and allow the user equipment to be attached to a network.

The local emergency center 902 includes a determining module 9021 and a temporary identity allocating module 9022. The determining module 9021 is configured to determine, according to the user information transmitted by the base station 901, whether the user equipment that initiates the attach procedure can continue the attach procedure. If a determination result of the determining module 9021 is that the attach procedure cannot be continued, the temporary identity allocating module 9022 allocates a temporary communication identity for the user equipment and allows the user equipment to be attached to a network.

In another embodiment of the present invention, a determining module 9021 may further include a searching unit 1001 and a first determining unit 1002. FIG. 10 shows a communication system according to another embodiment of the present invention. The searching unit 1001 is configured to search for user information stored in a local emergency center 902; and the first determining unit 1002 is configured to, if user information of the user equipment is stored in the local emergency center 902, determine that a user equipment that initiates an attach procedure can continue the attach procedure.

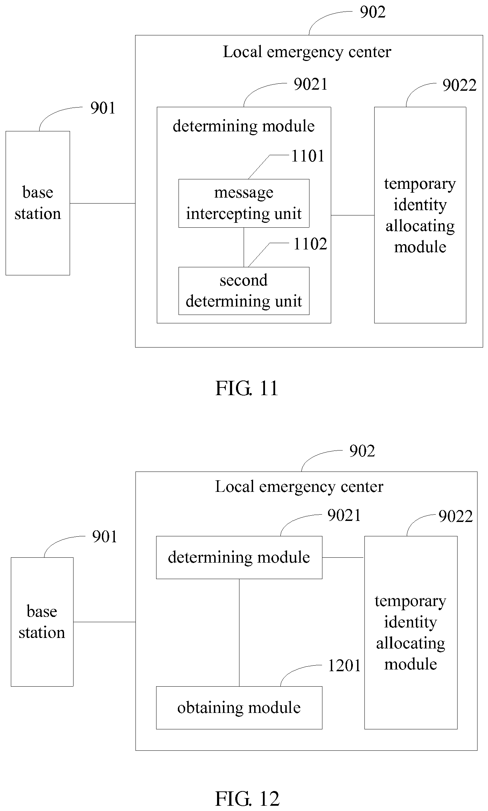

In another embodiment of the present invention, a determining module 9021 may include a message intercepting unit 1101 and a second determining unit 1102. FIG. 11 shows a communication system according to another embodiment of the present invention. The message intercepting unit 1101 is configured to intercept a message that is fed back by a core network to a user equipment; and the second determining unit 1102 is configured to, if the message intercepted by the message intercepting unit 1101 is a rejection message that attachment of the user equipment to a network is rejected, determine that a user equipment that initiates an attach procedure cannot continue the attach procedure.

In another embodiment of the present invention, a local emergency center 902 may further include an obtaining module 1201. FIG. 12 shows a communication system according to another embodiment of the present invention. The obtaining module 1201 is configured to obtain user information and store the user information in the local emergency center 902.

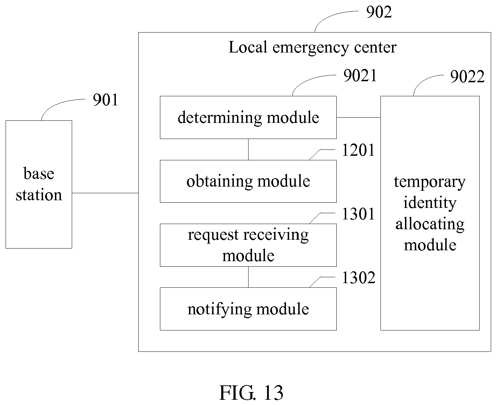

In another embodiment of the present invention, a local emergency center 902 may further include a request receiving module 1301 and a notifying module 1302. FIG. 13 shows a communication system according to another embodiment of the present invention. The request receiving module 1301 is configured to receive a request for modifying a temporary communication identity from a user equipment; and the notifying module 1302 is configured to notify the user equipment of a modified temporary communication identity according to the request received by the request receiving module 1301.

It should be noted that because information exchange between modules/units in foregoing the device and execution processes are based on the same conception as the method embodiments of the present invention, they bring the same technical effects as those in the method embodiments, and for details, reference may be made to the description in the foregoing method embodiments, which are not repeated herein.

Persons of ordinary skill in the art may understand that all or part of the steps of the methods in the foregoing embodiments may be implemented by a program instructing relevant hardware. The program may be stored in a computer readable storage medium. The storage medium may include a read-only memory (ROM, Read Only Memory), a random access memory (RAM, Random Access Memory), a magnetic disk, or an optical disk.

The access method and device for a user equipment in an abnormal state, and a communication system according to the embodiments of the present invention are described in detail in the foregoing. Although the principle and implementation manner of the present invention are described by using specific examples in this specification, the descriptions of the foregoing embodiments are only used for helping understand the method and core ideas of the present invention. Meanwhile, persons of ordinary skill in the art may make modifications and variations to the specific implementation manner and application scope according to the ideas of the present invention. In conclusion, content of the present invention shall not be construed as a limitation to the present invention.

## Claims

1. An access method for a user equipment in an abnormal state, **characterized in** comprising:
determining, by a local emergency center (902), whether a user equipment that initiates an attach procedure can continue the attach procedure;
allocating, by the local emergency center (902), a temporary communication identity for the user equipment; and
allowing, by the local emergency center (902), the user equipment to be attached to a network if the attach procedure cannot be continued.

2. The method according to claim 1, wherein the determining, by the local emergency center (902), whether the user equipment that initiates the attach procedure can continue the attach procedure comprises:
searching, by the local emergency center (902), for user information stored locally; and
determining, by the local emergency center (902), that the user equipment that initiates the attach procedure can continue the attach procedure if user information of the user equipment is stored in the local emergency center (902).

3. The method according to claim 1, wherein the determining, by the local emergency center (902), whether the user equipment that initiates the attach procedure can continue the attach procedure comprises:
intercepting, by the local emergency center (902), a message that is fed back by a core network to the user equipment; and
determining, by the local emergency center (902), that the user equipment that initiates the attach procedure cannot continue the attach procedure if the message is a rejection message that attachment of the user equipment to the network is rejected.

4. The method according to any one of claims 1-3, wherein the method further comprises:
obtaining, by the local emergency center (902), user information; and
storing, by the local emergency center (902), the user information in the local emergency center (902).

5. The method according to any one of claim 1-4, wherein the method further comprises:
receiving, by the local emergency center (902), a request for modifying the temporary communication identity sent from the user equipment; and
notifying, by the local emergency center (902), the user equipment of a modified temporary communication identity according to the request.

6. An access device for a user equipment in an abnormal state, **characterized in that** the device is a local emergency center (902), and the local emergency center (902) comprises:
a determining module (9021), configured to determine whether a user equipment that initiates an attach procedure can continue the attach procedure; and
a temporary identity allocating module (9022), configured to, if a determination result of the determining module (9021) is that the attach procedure cannot be continued, allocate a temporary communication identity for the user equipment and allow the user equipment to be attached to a network.

7. The device according to claim 6, wherein the determining module (9021) comprises:
a searching unit (1001), configured to search for user information stored in the local emergency center (902); and
a first determining unit (1002), configured to, if user information of the user equipment is stored in the local emergency center (902), determine that the user equipment that initiates the attach procedure can continue the attach procedure.

8. The device according to claim 6, wherein the determining module (1002) comprises:
a message intercepting unit (1101), configured to intercept a message that is fed back by a core network to the user equipment; and
a second determining unit (1102), configured to, if the message intercepted by the message intercepting unit (1101) is a rejection message that attachment of the user equipment to the network is rejected, determine that the user equipment that initiates the attach procedure cannot continue the attach procedure.

9. The device according to any one of claims 6-8, wherein the device further comprises:
an obtaining module (1201), configured to obtain user information and store the user information in the local emergency center (902).

10. The device according to any one of claims 6-9, wherein the device further comprises:
a request receiving module (1301), configured to receive a request for modifying the temporary communication identity from the user equipment; and
a notifying module (1302), configured to notify the user equipment of a modified temporary communication identity according to the request received by the request receiving module (1301).

11. A communication system, **characterized in that** the communication system comprises a base station (901) and a local emergency center (902) according to any one of claims 6 to 10;
wherein the base station (901) is configured to interact with a user equipment that initiates an attach procedure and transmit user information of the user equipment to the local emergency center (902).

12. A computer program product, **characterised in**, comprising a computer program code, which, when executed by a computer unit, will cause the computer unit to perform steps of the local emergency center (902) according to any one of claims 1 to 5.

## Patentansprüche

1. Zugriffsverfahren für ein Benutzergerät in einem anormalen Zustand, **dadurch gekennzeichnet, dass** es aufweist:
Bestimmen, durch eine lokale Notfallzentrale (902), ob ein Benutzergerät, das eine Anbindungsprozedur initiiert, die Anbindungsprozedur fortsetzen kann, Zuordnen, durch die lokale Notfallzentrale (902), einer vorübergehenden Kommunikationsidentität für das Benutzergerät; und
Erlauben, durch die lokale Notfallzentrale (902), dem Benutzergerät, dass es an ein Netzwerk angehängt werden kann, wenn die Anbindungsprozedur nicht fortgesetzt werden kann.

2. Verfahren nach Anspruch 1, wobei das Bestimmen, durch die lokale Notfallzentrale (902), ob das Benutzergerät, das die Anbindungsprozedur initiiert, die Anbindungsprozedur fortsetzen kann, aufweist:
Suchen, durch die lokale Notfallzentrale (902), nach lokal gespeicherten Benutzerinformationen; und
Bestimmen, durch die lokale Notfallzentrale (902), dass das Benutzergerät, das die Anbindungsprozedur initiiert, die Anbindungsprozedur fortsetzen kann, wenn Benutzerinformationen des Benutzergeräts in der lokalen Notfallzentrale (902) gespeichert sind.

3. Verfahren nach Anspruch 1, wobei das Bestimmen, durch die lokale Notfallzentrale (902), ob das Benutzergerät, das die Anbindungsprozedur initiiert, die Anbindungsprozedur fortsetzen kann, aufweist:
Abfangen, durch die lokale Notfallzentrale (902), einer Nachricht, die von einem Kernnetzwerk zu dem Benutzergerät zurückgeführt wird; und
Bestimmen, durch die lokale Notfallzentrale (902), dass das Benutzergerät, das die Anbindungsprozedur initiiert, die Anbindungsprozedur nicht fortsetzen kann, wenn die Nachricht eine Ablehnungsnachricht ist, dass die Anbindung des Benutzergeräts an das Netzwerk abgelehnt wird.

4. Verfahren nach einem der Ansprüche 1-3, wobei das Verfahren ferner aufweist:
Erhalten, durch die lokale Notfallzentrale (902), von Benutzerinformationen; und
Speichern, durch die lokale Notfallzentrale (902), der Benutzerinformationen in der lokalen Notfallzentrale (902).

5. Verfahren nach einem der Ansprüche 1 - 4, wobei das Verfahren ferner aufweist:
Empfangen, durch die lokale Notfallzentrale (902), einer von dem Benutzergerät gesendeten Anforderung zum Modifizieren der temporären Kommunikationsidentität; und
Benachrichtigen, durch die lokale Notfallzentrale (902), des Benutzergeräts über eine geänderte temporäre Kommunikationsidentität gemäß der Anforderung.

6. Zugangsvorrichtung für ein Benutzergerät in einem anormalen Zustand, **dadurch gekennzeichnet, dass** das Gerät eine lokale Notfallzentrale (902) ist, und die lokale Notfallzentrale (902) aufweist:
ein Bestimmungsmodul (9021), das konfiguriert ist, zu bestimmen, ob ein Benutzergerät, das eine Anbindungsprozedur initiiert, die Anbindungsprozedur fortsetzen kann; und
ein temporäres Identitätszuteilungsmodul (9022), das konfiguriert ist, wenn ein Bestimmungsergebnis des Bestimmungsmoduls (9021) lautet, dass die Anbindungsprozedur nicht fortgesetzt werden kann, eine temporäre Kommunikationsidentität für das Benutzergerät zuzuordnen und dem Benutzergerät zu erlauben, an das Netzwerk angebunden zu werden.

7. Vorrichtung nach Anspruch 6, wobei das Bestimmungsmodul (9021) aufweist:
eine Sucheinheit (1001), die konfiguriert ist, nach Benutzerinformationen zu suchen, die in der lokalen Notfallzentrale (902) gespeichert sind; und
eine erste Bestimmungseinheit (1002), die konfiguriert ist, wenn Benutzerinformationen des Benutzergeräts in der lokalen Notfallzentrale (902) gespeichert sind, zu bestimmen, dass das Benutzergerät, das die Anbindungsprozedur initiiert, die Anbindungsprozedur fortsetzen kann.

8. Vorrichtung nach Anspruch 6, wobei das Bestimmungsmodul (1002) aufweist:
eine Nachrichtenabfangeinheit (1101), die konfiguriert ist, eine Nachricht abzufangen, die von einem Kernnetzwerk zu dem Benutzergerät zurückgeführt wird; und
eine zweite Bestimmungseinheit (1102), die konfiguriert ist, wenn die Nachricht, die von der Nachrichtenabfangeinheit (1101) abgefangen wird, eine Ablehnungsnachricht ist, dass die Anbindung des Benutzergeräts an das Netzwerk abgelehnt wird, zu bestimmen, dass das Benutzergerät, das die Anbindungsprozedur initiiert, die Anbindungsprozedur nicht fortsetzen kann.

9. Vorrichtung nach einem der Ansprüche 6 - 8, wobei die Vorrichtung ferner aufweist:
ein Ermittlungsmodul (1201), das konfiguriert ist, Benutzerinformationen zu erhalten und die Benutzerinformationen in der lokalen Notfallzentrale (902) zu speichern.

10. Vorrichtung nach einem der Ansprüche 6 - 9, wobei die Vorrichtung ferner aufweist:
ein Anforderungsempfangsmodul (1301), das konfiguriert ist, eine Anforderung zum Modifizieren der temporären Kommunikationsidentität von dem Benutzergerät zu empfangen; und
ein Benachrichtigungsmodul (1302), das konfiguriert ist, das Benutzergerät über eine modifizierte temporäre Kommunikationsidentität gemäß der von dem Anforderungsempfangsmodul (1301) empfangenen Anforderung zu benachrichtigen.

11. Kommunikationssystem, **dadurch gekennzeichnet, dass** das Kommunikationssystem eine Basisstation (901) und eine lokale Notfallzentrale (902) nach einem der Ansprüche 6 bis 10 aufweist;
wobei die Basisstation (901) konfiguriert ist, mit einem Benutzergerät zu interagieren, das eine Anbindungsprozedur initiiert, und Benutzerinformationen des Benutzergeräts an die lokale Notfallzentrale (902) zu übertragen.

12. Computerprogrammprodukt, **dadurch gekennzeichnet, dass** es einen Computerprogrammcode aufweist, der bei einer Ausführung von einer Computereinheit die Computereinheit dazu veranlasst, Schritte der lokalen Notfallzentrale (902) nach einem der Ansprüche 1 bis 5 durchzuführen.

## Revendications

1. Procédé d'accès pour un équipement utilisateur dans un état anormal, **caractérisé en ce qu'**il comprend les étapes suivantes :
déterminer, par un centre de secours local (902), si un équipement utilisateur qui initie une procédure d'attachement peut continuer la procédure d'attachement ;
attribuer, par le centre de secours local (902), une identité de communication temporaire pour l'équipement utilisateur ; et
permettre, par le centre de secours local (902), à l'équipement utilisateur d'être attaché à un réseau si la procédure d'attachement ne peut pas être poursuivie.

2. Procédé selon la revendication 1, dans lequel l'étape consistant à déterminer, par le centre de secours local (902), si l'équipement utilisateur qui initie la procédure d'attachement peut continuer la procédure d'attachement comprend :
rechercher, par le centre de secours local (902), des informations utilisateur stockées localement ; et
déterminer, par le centre de secours local (902), que l'équipement utilisateur qui initie la procédure d'attachement peut continuer la procédure d'attachement si des informations utilisateur de l'équipement utilisateur sont stockées dans le centre de secours local (902).

3. Procédé selon la revendication 1, dans lequel l'étape consistant à déterminer, par le centre de secours local (902), si l'équipement utilisateur qui initie la procédure d'attachement peut continuer la procédure d'attachement comprend :
intercepter, par le centre de secours local (902), un message qui est retourné par un réseau d'infrastructure à l'équipement utilisateur ; et
déterminer, par le centre de secours local (902), que l'équipement utilisateur qui initie la procédure d'attachement ne peut pas continuer la procédure d'attachement si le message est un message de rejet indiquant qu'un attachement de l'équipement utilisateur au réseau est rejeté.

4. Procédé selon l'une quelconque des revendications 1-3, dans lequel le procédé comprend en outre :
obtenir, par le centre de secours local (902), des informations utilisateur ; et
stocker, par le centre de secours local (902), les informations utilisateur dans le centre de secours local (902).

5. Procédé selon l'une quelconque des revendications 1-4, dans lequel le procédé comprend en outre :
recevoir, par le centre de secours local (902), une requête de modification de l'identité de communication temporaire envoyée à partir de l'équipement utilisateur ; et
notifier, par le centre de secours local (902), à l'équipement utilisateur une identité de communication temporaire modifiée selon la requête.

6. Dispositif d'accès pour un équipement utilisateur dans un état anormal, **caractérisé en ce que** le dispositif est un centre de secours local (902), et le centre de secours local (902) comprend :
un module de détermination (9021), configuré pour déterminer si un équipement utilisateur qui initie une procédure d'attachement peut continuer la procédure d'attachement ; et
un module d'attribution d'identité temporaire (9022), configuré pour attribuer, si un résultat de détermination du module de détermination (9021) est que la procédure d'attachement ne peut pas être poursuivie, une identité de communication temporaire pour l'équipement utilisateur et permettre à l'équipement utilisateur d'être attaché à un réseau.

7. Dispositif selon la revendication 6, dans lequel le module de détermination (9021) comprend :
une unité de recherche (1001), configurée pour rechercher des informations utilisateur stockées dans le centre de secours local (902) ; et
une première unité de détermination (1002), configurée pour déterminer, si des informations utilisateur de l'équipement utilisateur sont stockées dans le centre de secours local (902), que l'équipement utilisateur qui initie la procédure d'attachement peut continuer la procédure d'attachement.

8. Dispositif selon la revendication 6, dans lequel le module de détermination (1002) comprend :
une unité d'interception de message (1101), configurée pour intercepter un message qui est retourné par un réseau d'infrastructure à l'équipement utilisateur ; et
une deuxième unité de détermination (1102), configurée pour déterminer, si le message intercepté par l'unité d'interception de message (1101) est un message de rejet indiquant qu'un attachement de l'équipement utilisateur au réseau est rejeté, que l'équipement utilisateur qui initie la procédure d'attachement ne peut pas continuer la procédure d'attachement.

9. Dispositif selon l'une quelconque des revendications 6-8, dans lequel le dispositif comprend en outre :
un module d'obtention (1201), configuré pour obtenir des informations utilisateur et stocker les informations utilisateur dans le centre de secours local (902).

10. Dispositif selon l'une quelconque des revendications 6-9, dans lequel le dispositif comprend en outre :
un module de réception de requête (1301), configuré pour recevoir une requête de modification de l'identité de communication temporaire à partir de l'équipement utilisateur ; et
un module de notification (1302), configuré pour notifier à l'équipement utilisateur une identité de communication temporaire modifiée selon la requête reçue par le module de réception de requête (1301).

11. Système de communication, **caractérisé en ce que** le système de communication comprend une station de base (901) et un centre de secours local (902) selon l'une quelconque des revendications 6 à 10 ;
la station de base (901) étant configurée pour interagir avec un équipement utilisateur qui initie une procédure d'attachement et transmettre des informations utilisateur de l'équipement utilisateur au centre de secours local (902).

12. Produit programme d'ordinateur, **caractérisé en ce qu'**il comprend un code de programme d'ordinateur qui, lorsqu'il est exécuté par une unité informatique, amènera l'unité informatique à exécuter les étapes du centre de secours local (902) selon l'une quelconque des revendications 1 à 5.
